# EUROPEAN PATENT APPLICATION

(11) **EP 3 001 286 A1**
(43) Date of publication of application: **30.03.2016**
(21) Application number: 15184118.6
(22) Date of filing: 07.09.2015
(51) Int. Cl.: G06F 3/03, G06F 9/44, G06F 3/048, G06F 3/01, G06K 9/00

(54) **APPARATUS AND METHOD FOR AUTOMATED ADAPTATION OF A USER INTERFACE**

(30) Priority: 24.09.2014 GB 201416835
(71) Applicant: Sony Computer Entertainment Europe Ltd., London W1F 7LP (GB)
(72) Inventor: BIGOS, Andrew James, London, W1F 7LP (GB); BOULTER, Joseph Charles, London, W1F 7LP (GB)
(74) Representative: D Young & Co LLP

(57) **Abstract**

A device (1) for interaction with a user comprises image input means (30) operable to receive a video image comprising an image of at least the user's face, an analysis processor (10) adapted to analyse the video image, and to classify the user as belonging to a respective demographic group in dependence upon analysis of the image of at least the user's face, and an interface processor (10) adapted to generate a user interface for output to the user, in which the interface processor is operable to modify one or more elements of the user interface in response to the respective demographic group to which the user is classified as belonging.

## Description

The present invention relates to an apparatus and method of user interaction.

Some existing computer interfaces can be customised by a user to suit their preferences, for example by setting up and/or modifying a user preference profile. However it would be preferable to simplify this customisation process where possible.

In a first aspect, a device for interaction with the user is provided in accordance with claim 1.

In another aspect, a server provided in accordance with claim 10.

In another aspect, a method of user interaction is provided in accordance with claim 11.

In another aspect, a method of user interaction for a server provided in accordance with claim 14.

Further respective aspects and features of the invention are defined in the appended claims.

Embodiments of the present invention will now be described by way of example with reference to the accompanying drawings, in which:
- Figure 1 is a schematic diagram of a user and a device in accordance with an embodiment of the present invention.
- Figure 2 is a schematic diagram of a device in accordance with an embodiment of the present invention.
- Figure 3 is a schematic diagram of a plurality of devices and a server in accordance with an embodiment of the present invention.
- Figure 4 is a flow diagram of a method of user interaction in accordance with an embodiment of the present invention.
- Figure 5 is a flow diagram of a method of user interaction for a server in accordance with an embodiment of the present invention.

An apparatus and method of user interaction are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

### 1. Overview

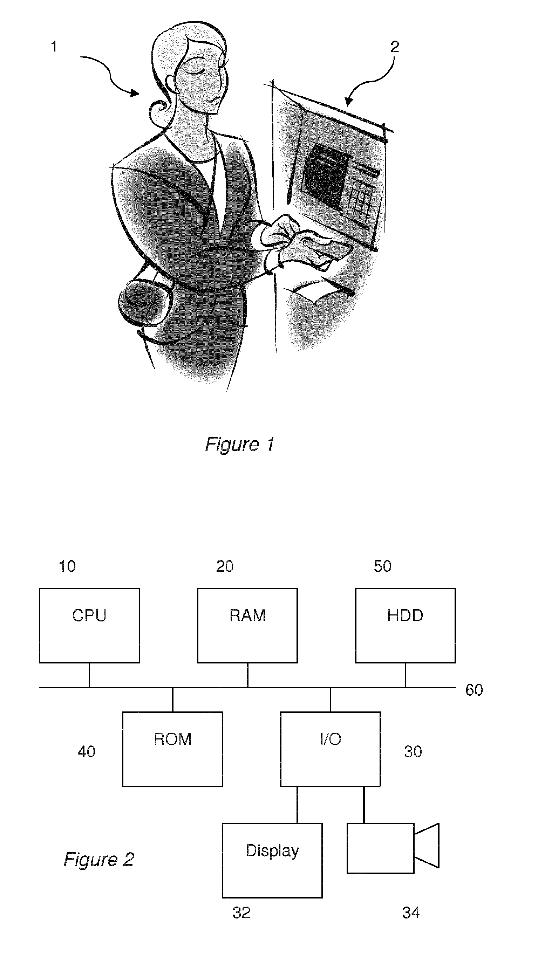

As illustrated in Figure 1, a user (1) interacts with a computerised device (2) for the first and possibly only time. Examples of possible devices where this is likely to occur include cash machines (automatic teller machines), automated supermarket checkouts, ticket purchase/dispensing machines, airport check-in machines, video arcade machines, biometric security scanners, public telephone or internet access machines, card payment machines, shop window interactive displays, photo booths, tourist information points and the like.

In these circumstances, customising the user interface to suit the preferences of the user by setting up a profile for the user that they can modify is impractical; firstly the time taken to set up the profile is likely to be longer than the time normally spent interacting with machine, and secondly given that such a machine is likely to be used by a very large number of people just once, the accumulation of single-use profiles within the machine would represent a needless overhead.

In addition other computerised devices that are interacted with (or have settings adjusted) by a user for a first time and/or only occasionally include smart televisions, telephones, tablets, computers and videogame consoles. Again, setting up profiles for a user to modify may be inconvenient or impractical (for example where the available input mechanisms may be limited, such as in the case of a smart TV) or seen as an unwanted intrusion by the user during a more general setup process.

Accordingly it is desirable to provide a means of tailoring a user interface to a user who is interacting with a device for the first and possibly only time that does not require the user to explicitly modify user interface preferences and does not require the host device to store a permanent profile.

### 1.1 Overview of Device

Referring now to Figure 2, this schematically illustrates the device 2 shown in Figure 1. The device comprises a processor (CPU) 10, a random access memory (RAM) 20, and an input/output (I/O) controller 30, a read only memory (ROM) 40 and optionally a hard disk drive (HDD) 50. All of these components are connected together by one or more data buses 60.

The CPU 10 executes program code retrieved from the ROM 40 or the HDD 50, and uses the RAM to store temporary data relating to a current operational state of program execution while the processor is executing the program code for a current application.

As such, the device can be understood to be a general-purpose computer adapted as applicable to one of the roles described previously above, and further adapted to provide a tailored user interface as described below.

In an embodiment of the present invention, the (I/O) controller is connectable to a display 32 and a camera 34, such as a video camera. The camera may optionally include a microphone.

The display (and/or optionally a loudspeaker) is used to present the device's interface to the user, either visually and/or optionally aurally, as is applicable to the device and its purpose.

The camera is arranged in operation to capture an image comprising at least the face of the user operating the device, and more generally their head and upper torso (i.e. their bust).

The processor, operating under suitable software instruction, then analyses the image of the user for physical and cultural cues that may be used to modify the user interface.

Cues include gender and age, skin tone, facial expressions indicative of mood, and modifications or decorations of the head/face/neck that are indicative of social and cultural values. Such decorative modifications include wearing a cross, bindi, veil, kipa or turban. In some instances these modifications also correlate strongly with gender, assisting with gender identification.

The detection of cues is described in more detail later herein.

The detected cues enable a demographic classification of the user, and the user interface can then be modified accordingly.

### 1.2 Example

For example, a 70 year old woman may use a cash machine in France (which is adapted according to the present invention) for the first time.

When she approaches the device, the camera captures an image of her and detects her gender and approximate age.

In response, the user interface displays and/or speaks 'Bonjour Madame, comment allez-vous?' ('Good day Madam, how are you'), and in doing so selects a form of address appropriate to the woman's age and sex by using 'Madame' rather than 'Mademoiselle', and the formal 'vous' rather than the informal 'tu'.

In addition, in response to her age, the interface displays options on-screen for longer than the default period, and uses a larger font than the default size.

Examples of modifications to the user interface are described in more detail later herein.

### 2. Detection of cues

Cues that are relevant to the modification of a user interface can be broadly classified as physical (gender, age) and cultural (markers of cultural identity).

### 2.1 Physical cues - Gender

Apparent gender can be estimated from a number of factors. Facial shape, the proportions of facial features, hair length and style, facial hair, and the use of make-up are all possible indicators of gender, but individually these can be unreliable or inconsistent.

To deal with this issue of unreliability and inconsistency, in an embodiment of the present invention a probabilistic classifier, such as a neural network or Bayesian network, is trained in advance on a corpus of male and female face images. The face images are typically abstracted by the classifier to form a feature vector of manageable size that encapsulates distinguishing features of the face.

The feature vector may for example comprise eigenvalues of an image of the face, or a normalised version thereof (for example in grey scale and centred between the eyes of the user).

Alternatively or in addition, the feature vector may comprise one or more parametric descriptors of the face after normalisation (for example normalised to a common pixel distance between eye centroids) such as:
Facial proportions
   Vertical distance between eyes and nose tip;
   Vertical distance between eyes and the centre of the lips;
   nose width ;
   lips width; and/or
   ratio of face width at eye level and lip level.
Facial features
   eyebrow shape and/or thickness;
   facial hair shape and/or thickness;
   apparent hair length; and/or
   presence of non-skin tones (i.e. make-up) near eyes.

Where an image of the user's upper body is available, then body shape may also be used as a cue.

The classifier adapts in response to the training corpus to provide a classification of 'male' or 'female' for an input feature vector. Typically the classification takes a non-binary form; that is to say the classifier will output a value indicative of the probability of the input feature vector belonging to one classification or the other.

Consequently, in use when the device captures an image of the current user and analyses the image to extract one or more of an eigenvector representative the face, one or more facial proportion descriptors, and/or one or more facial feature descriptors to form an input feature vector, the classifier will respond to the input feature vector with a value indicative of the probability of the user belonging to one particular gender or the other.

As noted previously, other features such as wearing a veil or necklace for a woman, or a turban for a man, are likely indicators of gender and if detected (see below) may be used instead of or in conjunction with the above features by the classifier - or separately and in parallel with the classifier; for example in a weighted sum of probability from the two sources of evidence (from the classification and the detected cultural marker). Suitable weights may be determined empirically.

In any event, in response to the output indication of probable gender the device can modify the user interface appropriately, for example to select male or female terms of address. Optionally a threshold probability can be set for each gender, so that a gender specific form of address is only selected if the probability indicated by the classifier (or a combined weighted output as described above) exceeds the threshold. This will reduce the scope to cause offence if the incorrect gender is selected. Optionally different thresholds may be selected for each gender. If the probability of a specific gender does not exceed the threshold, then where a language permits, a gender neutral form of address may be selected, or if necessary alternative dialogue may be selected that allows for communication without the use of a gender specific form of address.

### 2.2 Physical cues - Age

The most reliable indicators of age are height, hair colour and skin texture. Height can generally be used to distinguish children from adults, although of course adults of short stature may be miss-classified if this is the only metric used.

Meanwhile grey or partially grey hair can be reasonably assumed to be indicative of an older person.

Alternatively or in addition, skin texture can be used to estimate the user's age. Skin texture can be evaluated by selecting regions of skin on the face (for example adjacent to and parallel with the eyes and lips) and normalising the image in that region before measuring the variance of pixel values within the region. Smooth skin with have low variance, whilst older skin and wrinkled skin will have a higher variance. There is a rough correlation between this variance and the age of the user.

Alternatively or in addition a frequency analysis of the regions can be performed to detect wrinkle features, which cause a characteristic peak in image frequency components distinct from either skin (higher frequency) or shading due to facial curvature (lower frequency).

Using one or more of these cues, the device can modify the user interface appropriately, for example to select casual or formal modes of address as noted previously.

It will be appreciated that some languages and cultures have different linguistic responses to age. Hence age may not make any difference to language use for example in most cases of English dialog, but can have a complex effect for example in German. In German it is typical to use the polite form 'sie' ('you') for people over the age of around 16, and to use the familial form 'du' ('you') for those under 16. However, if the device is presented as a 'fun' device (for example, a device in a record store for selecting and listening to clips of songs) then it may be appropriate for it to use the 'du' form with users up until the age of around 30.

Hence age may or may not be a factor in modifying the chosen vocabulary of the user interface, depending on the location of the device.

In any event, optionally the device may classify the user's age to the degree of granularity possible based upon the indicators used. Hence for example it may classify a user as a child (e.g. as a function of short height, non-grey hair, and/or smooth skin tone), an adult (e.g. as a function of normal height, mostly non-grey hair and less smooth skin tone), or a retired person (e.g. as a function of grey or partially grey hair and wrinkled skin tone).

### 2.3 Cultural cues

As noted above, cultural cues tend to take the form of clear and distinctive symbols, carried either as marks or accessoues to the face or head. As such optionally one or more of these symbols may be detected for example using template matching.

Hence for example a cross may be detected in the central neck region of the user using template matching. Similarly a bindi may be detected between the eyebrows or in the central forehead region of the user using template matching.

Meanwhile a veil can be detected due to its obscuration of facial features, and a turban typically has a distinctive shape together with aligned folds of material, and also tends to impose a triangular profile on the forehead and hair line of the user.

Other cultural cues that may be broadly classified as countercultural could also be detected in a similar manner, such as lip, nose and eyebrow piercings.

Again these cultural cues may be used to select appropriate terms of address for the user.

### 3. Modifications to the user interface

In the above description, an example modification of the user interface illustrated the selection of gender appropriate and optionally age-appropriate terms of address. However modifications to the user interface are not limited to this example.

A user interface may comprise a number of general features:
i. an input scheme
ii. an option tree
iii. an output scheme
any or all of these may be modified in response to the detected gender and optionally the apparent age and/or culture of the user.

### 3.1 Input and output schemes

In response to gender classification, as noted above both input and output schemes can be modified to use gender appropriate terms of address. In addition, graphical embellishments of the user interface may be selected according to gender; hence in the example of a cash machine noted previously, if the machine is displaying further information during the transaction that is accompanied by a picture of a human representative of the bank, the gender of the representative can be selected responsive to the gender of the user.

In response to age classification then again as noted above both input and output schemes can be modified to use age-appropriate terms of address.

Alternatively or addition, for classes of people for whom the default computer-based interface may be complex or confusing, such as children or the elderly, the interface may be modified to provide longer time periods in which to read questions posed by the device, or modified to increase the volume of spoken questions; and the interface may be modified to provide longer time periods in which to input responses, such as pin numbers or option selections. Similarly, the wording used to pose questions may be simplified, and/or may be displayed in a larger font size than the default.

Similarly, for classes of people for whom a default computer game difficulty may be too high (e.g. the elderly or very young), this difficulty setting may be changed to provide easier game play, either by changing to a pre-existing setting (such as 'easy' instead of 'normal'), or by modifying gameplay aspects such as slowing down enemies, and/or activating a guide or pointer to assist with puzzles or objectives. Again similarly, aspects of a game display, such as subtitle text size or other key information, may be simplified or provided in a larger format.

It will be appreciated that these changes to the input and/or output scheme therefore make the same content more accessible by individuals classified as belonging in certain demographic groups, rather than change the content itself; changes to content are discussed below.

### 3.2 Option trees

Typically a user interface is provided in order to allow a user to navigate to one of a plurality of options that the device provides. If a device only provides a few options these may all be accessible from an initial list provided to the user, or where a device provides many options they may be provided in cascading branches accessed through lists at each branch point. This branching structure can be referred to as an option tree.

It will be appreciated that different classes of user (for example demographic groups divided by gender and age) may select different options from a device at different relative frequencies. In other words, different types of users may frequently want different things from the same device. Consequently the option tree of the user interface may be reordered in response to the detected gender and/or age and/or cultural group of the user (i.e. their demographic group) to present the most frequently requested options of that demographic group first. Hence such options may be presented at the top of an option list in the order of popularity with that group instead of at default positions in the list, or where an option is by default only accessible in a sub-branch of the option tree, that option may be promoted to a list earlier in the tree structure so that it is encountered by the user more quickly.

Clearly as an alternative to reordering the option tree, different option trees as a whole may be substituted for use with specific demographic groups. In either case the effect is to change the option tree to promote access to options more frequently selected by the demographic group to which the user is detected to belong.

Examples of options that may change priority as a function of age include the selection of concession price tickets for old or young users, whether or not an account balance check is offered prior to cash withdrawal, or whether or not age confirmation is required for the purchase of certain goods, etc. Options that may change priority as a function of gender are likely to be specific to the services offered by the device; for example a bank may wish to promote car insurance services specifically to female customers and so promote this option within the option tree.

Again for old or young users, the user interface may be simplified by reordering or substituting an option tree with fewer options at each branch point, but possibly with more levels of branches to provide the same overall number of options. This makes the individual decision step at each branch point simpler for the user, and may also facilitate the display of text with a larger font as mentioned previously.

### 3.3 Configurability

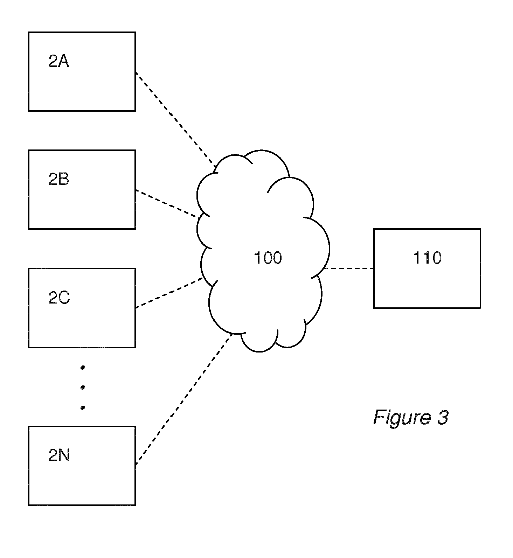

Referring now also to Figure 3, the preferences of users at the demographic group level may be assumed by the developers of the device, for example on the basis of focus group feedback. Alternatively or subsequently these preferences may be gathered from usage data from the device or a plurality of such devices (2A, 2B, 2C, ..., 2N), each transmitting over a network (100) such as the Internet back to a server (110) hosted by or for the developer, demographic group information such as gender and optionally age and cultural classifications along with an indication of what interactions the user performed, with suitable anonymity (for example no pin code would be recorded or needed). The developer can thus amass a statistically significant set of records to determine user preferences at the demographic group level and then transmit from the server an update to the or each device providing configuration information for the input scheme, output scheme and/or option tree for one or more such demographic groups.

### 4. Variants

In addition to other classifications such as gender or age, optionally the mood of the user may be gauged by recognising their expression. Parametric measures of the user's face similar to those described previously can be used as indicators of expression; for example the gap between the user's eyes and their eyebrows can be used as an indicator of whether or not they are frowning; the gap is typically in the order of one high eye height when a user's face is at rest, but the gap gets smaller if the user frowns.

In this case, the user interface may be modified, for example to remove gender specific terms in case the user is frowning in response to an inappropriate term, and to use formal modes of address where these are possible. Alternatively or in addition, timings for the display of information may be made shorter than default periods as a user who is frowning is more likely to be impatient.

Meanwhile, where some options in the option tree result in the user being connected to a human operator (for example in an audio only option tree provided by telephone system), then the demographic group of the user may be conveyed to the operator, and optionally a particular operator may be selected based upon their known gender, age and/or cultural background in response to the gender, age and/or cultural cues associated with the user.

Furthermore it will be appreciated that some devices may provide offers for products or services to entice the user to interact further with the device or to reward them for their custom. Accordingly offers for different products or services may be provided responsive to the demographic group detected for the user.

### 5. Summary

In a summary embodiment of the present invention, a device (1) for interaction with a user (such as one of the devices listed previously above), comprises an image input means (such as a USB port coupled to the I/O (30) for receiving a signal from a video camera (34)) operable to receive a video image comprising an image of at least the user's face. Typically the video camera will be mounted in or near a fascia of the device in order to capture a good view of the user. The device also comprises an analysis processor adapted to analyse the video image (for example CPU 10 operating under suitable software instructions), and to classify the user as belonging to a respective demographic group in dependence upon analysis of the image of at least the user's face. As noted above, it will be understood that such a 'demographic group' is the particular combination of features detected for the user, such as gender, age and/or cultural markers, and hence the number of possible groups depends in part on what features are detected and (for example in the case of age) the granularity of detection. The device also comprises an interface processor adapted to generate a user interface for output to the user (again for example CPU 10 operating under suitable software instructions), and this is operable to modify one or more elements of the user interface in response to the respective demographic group to which the user is classified as belonging.

In an instance of the summary embodiment, the interface processor is adapted to classify the user as belonging to a respective demographic group responsive to one or more selected from the list consisting of estimated gender, estimated age, and the detection of a cultural marker adorning the user, as explained previously. As noted above, where two or more of these features are detected, one feature may be used in the estimation of another, so that cultural markers strongly correlating with gender can be used in the gender estimation, and gender and age estimates may be used to adjust each other (for example the presence of a beard may be used restrict or bias age selection, whilst estimated age may be used to modify parameterisation of facial features).

In an instance of the summary embodiment, in response to the respective demographic group to which the user is classified as belonging, the interface processor is operable to modify the term of address used to address the user. As noted above, in some languages gender specific terms of address and also potentially age specific terms of address are commonly used.

In an instance of the summary embodiment, in response to the respective demographic group to which the user is classified as belonging, the interface processor is operable to select the length of time during which an input from the user is awaited. Hence an option or list of options or other input request may be displayed for longer for the elderly and/or children, whilst awaiting an input in response. In other words, the time-out for failing to respond to an input is extended for these demographic groups, whilst it may be kept at a default for other groups.

In an instance of the summary embodiment, in response to the respective demographic group to which the user is classified as belonging, the interface processor is operable to select one or more selected from the list consisting of, the font size of a displayed message, and the volume of a spoken message, as applicable. Clearly some devices may only display information, or some devices may only provide audible options. Meanwhile some may be capable of both. The interface processor can select to improve the accessibility of one or both modes of output depending on the specific circumstances of the device (for example a cash machine may be set to increase its font size but not its volume avoid alerting passers-by to the age and potential vulnerability of the current user, whilst a ticket machine at a railway station may increase its font size and its volume to assist users in a potentially noisy environment).

In an instance of the summary embodiment, in response to the respective demographic group to which the user is classified as belonging, the interface processor is operable to select an arrangement of an option sequence in the user interface to promote access to an option more frequently selected by that respective demographic group. As noted above, this may comprise reordering options in a single list to promote those deemed more relevant to the demographic group, and/or may comprise moving such options up the option tree so that they are encountered sooner by a user navigating the interface.

In an instance of the summary embodiment, in response to the respective demographic group to which the user is classified as belonging, the interface processor is operable to reduce the number of options presented at a decision point in an option sequence of the user interface. As noted previously, this can simplify the user interface for those who may find interacting with it more difficult.

In an instance of the summary embodiment, in response to the respective demographic group to which the user is classified as belonging, the interface processor is operable to include an option within an option sequence in the user interface that is specific to that respective demographic group. Again as noted previously this can relate to options such as age-specific concessions, or gender specific services, and more generally prices, services, products, promotions, rewards or offers selected by the operator of the device as being appropriate to the respective demographic group.

In an instance of the summary embodiment, the device comprises a network interface operable to transmit to a remote server (110) over a network (100) the user's detected demographic group and data indicating what option(s) the user selected during their interaction with the user interface. As noted previously, this enables it to provide demographic and usage information to the operator of the device, allowing them to further tailor the user interface to better suit subsequent users.

Accordingly, in a summary embodiment of the present invention a corresponding server (110) comprises a network interface (not shown) operable to receive over a network (100) from one or more remote devices data indicating a detected demographic group of a respective user and data indicating what option(s) that user selected during their interaction with the remote device, analysis means (such as a CPU - not shown - operating under suitable software instructions) to detect the relative frequency at which options are selected by respective demographic groups; and in which the network interface is operable to transmit to the or each remote device an instruction message to reconfigure their user interface in response to the relative frequency of selection of options for a respective demographic group.

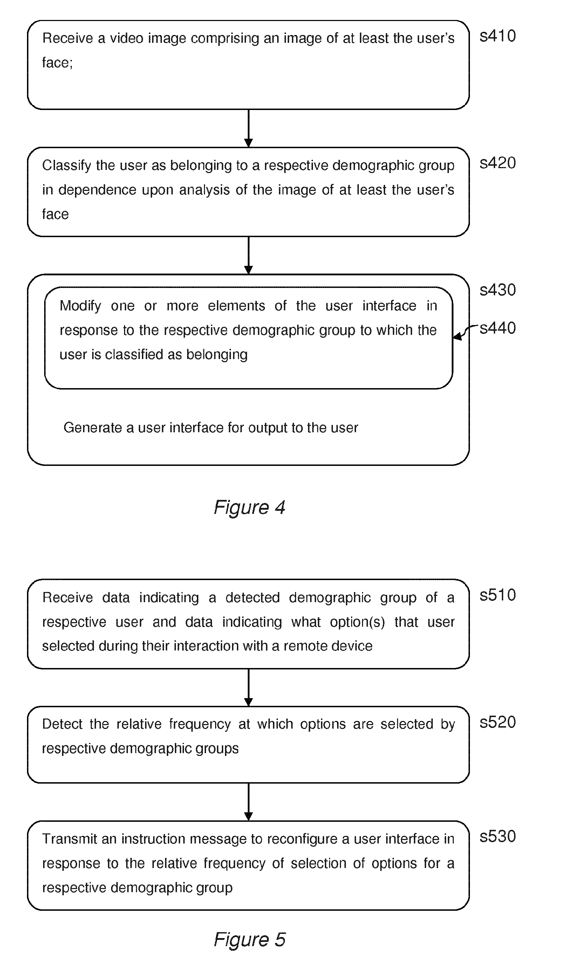

Turning now to Figure 4, in a summary embodiment of the present invention a method of user interaction comprises:
- in a first step s410, receiving a video image comprising an image of at least the user's face;
- in a second step s420, analysing the video image to classify the user as belonging to a respective demographic group in dependence upon analysis of the image of at least the user's face; and
- in a third step s430, generating a user interface for output to the user; and in which
- the step of generating the user interface comprises a fourth step s440 of modifying one or more elements of the user interface in response to the respective demographic group to which the user is classified as belonging.

It will be apparent to a person skilled in the art that variations in the above method corresponding to operation of the various embodiments of the apparatus as described and claimed herein are considered within the scope of the present invention, including but not limited to:
- the step s420 of analysing the video image to classify the user comprising the sub- step of selecting a respective demographic group responsive to one or more selected from the list consisting of estimated gender, estimated age, and the detection of a cultural marker adorning the user, as described previously;
- the step s440 of modifying the user interface comprising modifying the term of address used to reverse the user;
- the step s440 of modifying the user interface comprising selecting the length of time during which an input from the user is awaited;
- the step s440 of modifying the user interface comprising selecting one or more of the font size of a displayed message and the volume of spoken message, as applicable to the device and its role;
- the step s440 of modifying the user interface comprising selecting an arrangement of an option sequence in the user interface to promote access to an option more frequently selected by that respective demographic group;
- the step s440 of modifying the user interface comprising reducing the number of options presented at a decision point in option sequence of the user interface;
- the step s440 of modifying the user interface comprising including an option within an option sequence in the user interface that is specific to that respective demographic group; and
- a step of transmitting to a remote server over a network the user's detected demographic group and data indicating what option(s) the user selected during the interaction with the user interface.

Similarly, turning now to Figure 5, in a summary embodiment of the present invention a method of user interaction for a server comprises:
- in a first step s510, receiving from one or more remote devices data indicating a detected demographic group of a respective user and data indicating what option(s) that user selected during their interaction with the remote device;
- in a second step s520, detecting the relative frequency at which options are selected by respective demographic groups; and
- in a third step s530, transmitting to the or each remote device an instruction message to reconfigure their user interface in response to the relative frequency of selection of options for a respective demographic group.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a tangible non-transitory machine-readable medium such as a floppy disk, optical disk, hard disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these of other networks.

## Claims

1. A device (1) for interaction with a user, comprising:
image input means (30) operable to receive a video image comprising an image of at least the user's face;
an analysis processor (10) adapted to analyse the video image, and to classify the user as belonging to a respective demographic group in dependence upon analysis of the image of at least the user's face; and
an interface processor (10) adapted to generate a user interface for output to the user;
and in which
the interface processor is operable to modify one or more elements of an input and/or output scheme of the user interface in response to the respective demographic group to which the user is classified as belonging.

2. A device according to claim 1, in which
the interface processor is adapted to classify the user as belonging to a respective demographic group responsive to one or more selected from the list consisting of:
i. estimated gender;
ii. estimated age; and
iii. the detection of a cultural marker adorning the user.

3. A device according to any one of the preceding claims, in which:
in response to the respective demographic group to which the user is classified as belonging, the interface processor is operable to modify the term of address used to address the user.

4. A device according to any one of the preceding claims, in which:
in response to the respective demographic group to which the user is classified as belonging, the interface processor is operable to select the length of time during which an input from the user is awaited.

5. A device according to any one of the preceding claims, in which:
in response to the respective demographic group to which the user is classified as belonging, the interface processor is operable to select one or more selected from the list consisting of:
i. the font size of a displayed message; and
ii. the volume of a spoken message,
as applicable.

6. A device according to any one of the preceding claims, in which:
in response to the respective demographic group to which the user is classified as belonging, the interface processor is operable to select an arrangement of an option sequence in the user interface to promote access to an option more frequently selected by that respective demographic group.

7. A device according to any one of the preceding claims, in which:
in response to the respective demographic group to which the user is classified as belonging, the interface processor is operable to reduce the number of options presented at a decision point in an option sequence of the user interface.

8. A device according to any one of the preceding claims, in which:
in response to the respective demographic group to which the user is classified as belonging, the interface processor is operable to include an option within an option sequence in the user interface that is specific to that respective demographic group.

9. A device according to any one of the preceding claims, comprising:
a network interface operable to transmit to a remote server over a network the user's detected demographic group and data indicating what option(s) the user selected during their interaction with the user interface.

10. A system, comprising
a device according to any one of the preceding claims, and
a server, in turn comprising
a network interface operable to receive over a network from one or more remote devices data indicating a detected demographic group of a respective user based on gender and/or age, and data indicating what option(s) that user selected during their interaction with the remote device;
analysis means to detect the relative frequency at which options are selected by respective demographic groups; and in which
the network interface is operable to transmit to the or each remote device an instruction message to reconfigure their user interface in response to the relative frequency of selection of options for a respective demographic group.

11. A method of user interaction, comprising the steps of:
receiving a video image comprising an image of at least the user's face;
analysing the video image to classify the user as belonging to a respective demographic group in dependence upon analysis of the image of at least the user's face; and
generating a user interface for output to the user;
and in which
the step of generating the user interface comprises modifying one or more elements of an input and/or output scheme of the user interface in response to the respective demographic group to which the user is classified as belonging.

12. A method according to claim 11, in which
the step of analysing the video image to classify the user comprises selecting a respective demographic group responsive to one or more selected from the list consisting of:
i. estimated gender;
ii. estimated age; and
iii. the detection of a cultural marker adorning the user.

13. A method according to claim 11 or claim 12, in which
the modification comprises selecting the term of address used to address the user.

14. A method of user interaction according to any one of claims 11 to 13 for a system comprising a remote device and a server, the method comprising the steps of:
receiving from one or more remote devices data indicating a detected demographic group of a respective user based on gender and/or age, and data indicating what option(s) that user selected during their interaction with the remote device;
detecting the relative frequency at which options are selected by respective demographic groups; and
transmitting to the or each remote device an instruction message to reconfigure their user interface in response to the relative frequency of selection of options for a respective demographic group.

15. A computer program product for implementing the steps of any preceding method claim.
